# EUROPÄISCHE PATENTANMELDUNG

(11) **EP 4 306 193 A1**
(43) Veröffentlichungstag der Anmeldung: **17.01.2024**
(21) Anmeldenummer: 23181403.9
(22) Anmeldetag: 26.06.2023
(51) Int. Cl.: B01D 29/00, B01D 29/64, D06F 39/10

(54) **RÜCKSPÜLEN VON PARTIKELFILTERN DURCH EINSPÜLDÜSEN**

(30) Priorität: 13.07.2022 DE 102022207149
(71) Anmelder: BSH Hausgeräte GmbH, 81739 München (DE)
(72) Erfinder: Bischof, Andreas, 10407 Berlin (DE); Eglmeier, Hans, 10587 Berlin (DE)

(57) **Zusammenfassung**

Die Erfindung betrifft ein Verfahren zum Reinigen eines Filters (12) in einem wasserführenden Haushaltsgerät (100), wobei während eines Arbeitsvorgangs des Haushaltsgeräts (100) Partikel (210) durch mindestens einen Filter (12) zurückgehalten werden, wobei während des Arbeitsvorgangs und/oder bei einer erneuten Inbetriebnahme des Haushaltsgeräts (100) der mindestens eine Filter (12) durch mindestens eine Einspüldüse (21) mit einem Wasserstrahl (W) beaufschlagt wird, wobei eine durch den Wasserstrahl (W) der Einspüldüse (21) beaufschlagte Filterfläche (13) vom Filtrat (210) freigelegt wird. Des Weiteren betrifft die Erfindung ein Einspülsystem (10) sowie ein Haushaltsgerät (100).

## Beschreibung

Die vorliegende Erfindung betrifft ein Verfahren zum Reinigen eines Mikroplastikfilters in einem wasserführenden Haushaltsgerät, wobei während eines Arbeitsvorgangs des Haushaltsgeräts Partikel durch mindestens einen Filter zurückgehalten werden. Des Weiteren betrifft die Erfindung ein Haushaltsgerät sowie ein Einspülsystem.

Zum Schutz der Umwelt und der Reduzierung von Mikroplastikpartikeln in Gewässern sowie Meeren ist ein Filtern von Mikroplastikpartikeln aus dem Abwasser von Haushaltsgeräten, wie Waschmaschinen, vorgesehen. Für derartige Aufgaben können Partikelfilter im Abwasserstrang eines Haushaltsgeräts eingesetzt werden, die alle Partikel ab einer vordefinierten Abmessung aus dem Abwasser herausfiltern. Beispielsweise kann das Herausfiltern von allen Partikeln ab einer Größe von 20 µm bedingt durch die entsprechende Auslegung des Partikelfilters erfolgen. Derartige Partikelfilter können jedoch nicht selektiv Mikroplastikpartikel aus dem Abwasser filtern, vielmehr werden alle vorhandenen Partikel, wie beispielsweise Baumwolle, Zeolith, Haare, Fette, Sand, Kalt, Schmutz und dergleichen, durch den Partikelfilter zurückgehalten. Mikroplastikpartikeln stellen dabei üblicherweise 1-3% aller vorhandenen Partikel der entsprechenden Größenordnung im Abwasser eines Haushaltsgeräts. Derartige Filter setzen sich aufgrund der unterschiedlichen Schmutzbestandteile oftmals innerhalb eines Waschgangs zu. Die nachfolgenden Waschvorgänge können somit stark verzögert, da die Filterwirkung beeinträchtigt ist. Generell müssen zugesetzte Filter manuell gereinigt oder ausgetauscht werden.

Es sind derzeit unterschiedliche Systeme zur Reinigung von Partikelfiltern bekannt, die beispielsweise durch mechanische Einwirkung die vorhandenen Filterflächen von Verunreinigungen befreien und somit die Filterwirkung für nachfolgende Reinigungsvorgänge aufrechterhalten können. Derartige Systeme erfordern jedoch eine Neukonstruktion der Einspülschale mit zusätzlichen mechanischen und elektronischen Komponenten.

Des Weiteren sind zur Erhöhung der Filterstandzeit Rückspülverfahren bekannt, die den Partikelfilter aktiv entgegen der eigentlichen Durchströmungsrichtung durchströmen, um so die Filteroberfläche von Rückständen zu befreien. Problematisch ist jedoch der erhöhte Aufwand durch zusätzliche hydraulische Komponenten sowie die zunehmende Anreicherung der Filtratlösung mit Partikeln.

Es ist daher die Aufgabe der vorliegenden Erfindung, ein Einspülsystem mit einem Filter für Mikroplastikpartikel zu schaffen, welches mit einer minimalen Bauteilvielfalt und mit einem minimalen Entwicklungsaufwand die Standzeit eines Partikelfilters erhöhen kann. Diese Aufgabe wird durch ein Verfahren mit den Merkmalen des Anspruchs 1, durch ein Einspülsystem mit den Merkmalen des Anspruchs 5 und durch ein Haushaltsgerät mit den Merkmalen des Anspruchs 10 gelöst.

Gemäß einem Aspekt der vorliegenden Erfindung wird ein Verfahren zum Reinigen eines Filters in einem wasserführenden Haushaltsgerät bereitgestellt, wobei während eines Arbeitsvorgangs des Haushaltsgeräts Partikel durch mindestens einen Filter zurückgehalten werden, wobei während des Arbeitsvorgangs und/oder bei einer erneuten Inbetriebnahme des Haushaltsgeräts der mindestens eine Filter durch mindestens eine Einspüldüse mit einem Wasserstrahl beaufschlagt wird, wobei eine durch den Wasserstrahl der Einspüldüse beaufschlagte Filterfläche von Partikeln freigelegt wird.

Gemäß einem Aspekt der vorliegenden Erfindung wird ein Verfahren zum Reinigen eines Filters, insbesondere eines Mikroplastikfilters, in einem wasserführenden Haushaltsgerät bereitgestellt. Während eines Arbeitsvorgangs des Haushaltsgeräts werden Partikel durch mindestens einen Filter zurückgehalten. Der mindestens eine Filter kann vorzugsweise als ein Partikelfilter zum Filtern, d.h. zum Zurückhalten, von Partikeln in der Größenordnung von Mikroplastikpartikeln ausgestaltet sein.

Während des Arbeitsvorgangs und/oder bei einer erneuten Inbetriebnahme des Haushaltsgeräts wird der mindestens eine Filter durch mindestens eine Einspüldüse mit einem Wasserstrahl beaufschlagt. Eine durch den Wasserstrahl der Einspüldüse beaufschlagte Filterfläche wird hierbei von dem Filtrat freigelegt. Durch das Beaufschlagen von mindestens einer Filterfläche mit dem Wasserstrahl erfolgt ein zumindest bereichsweises Freispülen von Filterflächen des Filters, wodurch die Filterfunktion erneut hergestellt wird.

Die mindestens eine Einspüldüse ist üblicherweise dazu eingerichtet, Waschhilfsstoffe, wie beispielsweise Waschmittel oder Weichspüler, aus der Einspülschale in den Laugenbehälter einzuspülen. Die Einspüldüse ist in oder an einer Decke der Einspülschale relativ zu einem Untergrund des Haushaltsgeräts angeordnet. Das Haushaltsgerät steht vorzugsweise auf dem Untergrund, auf welchen eine Schwerkraftrichtung zeigt. Der Laugenbehälter ist an einem Boden des Haushaltsgeräts oder an einer Position innerhalb des Haushaltsgeräts angeordnet, welcher dem Untergrund am nächsten angeordnet ist.

Bei einer alternativen Ausgestaltung kann die Einspülschale eine deckelseitige Düsenplatte aufweisen, an welcher die mindestens eine Einspüldüse angeordnet ist. Die Düsenplatte ist in einem oberen Bereich der Einspülschale angeordnet, welcher an einem, dem unteren Bereich der Einspülschale, entgegengesetzten Ende positioniert ist. Der untere Bereich der Einspülschale bzw. ein Boden der Einspülschale zeigt in Richtung des Untergrunds des Haushaltsgeräts. Der obere Bereich der Einspülschale ist vorzugsweise im an oder nahe einer Decke der Einspülschale bzw. des Gehäuses der Einspülschale angeordnet.

Bei der Verwendung von mehreren Einspüldüsen können diese entlang der Düsenplatte gleichmäßig oder ungleichmäßig verteilt sein. Beispielsweise kann eine oder mehrere Einspüldüsen im Bereich von Waschmittelkammern und eine oder mehrere Einspüldüsen im Bereich des mindestens einen Filters angeordnet sein, um eine lokale Beaufschlagung mit Frischwasser umzusetzen.

Gemäß der sogenannten DVGW-Bestimmung befinden sich die Einspüldüsen im Gehäuse der Einspülschale oberhalb eines Geräteüberlaufs, beispielsweise 5cm höher als der Geräteüberlauf.

Durch das erfindungsgemäße Verfahren können bereits bestehende Komponenten des Haushaltsgeräts, wie beispielsweise eines Waschgeräts, derart zum Rückspülen eines Filter genutzt werden, dass keine Filtratlösung anfällt, die entsorgt werden muss. Analog zu bekannten Lösungen kann der Filter bzw. das Filtersystem in der Einspülschale angeordnet sein und wird mit der mikroplastikfaserhaltigen Waschlauge gespeist.

Die Partikel und/oder Fasern werden durch die feine Filtergaze des Filters zurückgehalten. Dieser Vorgang resultiert grundsätzlich in einem Zusetzen des Filters. Bei der hier beschriebenen Lösung sind die Einspüldüsen im Einspülschalengehäuse derart angeordnet, dass das Frischwasser sowohl das Waschmittel aus der Einspülschale einspülen kann, als auch das geschlossene Filtersystem von außen bespült. Dabei können sich die von außen abgespülten Fasern am Boden des Filters relativ zur Schwerkraftrichtung sammeln. Ein derartiges Rückspülen von Fasern von Filteroberflächen führt zu einem gewissen Verdichten/Verknäulen der Fasern. Diese Faserknäule führen dabei zu einer Belegung der Filteroberflächen des Filters, die Filterkuchenschicht bzw. Faserschicht innerhalb des Filters für das Wasser durchgängiger ist, als ein homogener Filterteppich kleiner Fasern, welcher alle Filterflächen gleichmäßig bedeckt. Die gesäuberten bzw. durch den Wasserstrahl freigelegten Filterflächen ermöglichen weiterhin eine effiziente Filterwirkung der Waschlauge.

Bei einem Ausführungsbeispiel wird der mindestens eine Filter durch mindestens eine Einspüldüse bei jedem Einleiten von Frischwasser einem Wasserstrahl, insbesondere von einer Außenseite des Filters, beaufschlagt. Insbesondere bei einer Anordnung von mindestens einer Einspüldüse oberhalb des Filters kann im normalen Betrieb des Haushaltsgeräts jedes Einleiten von Frischwasser zum Rückspülen des Filters verwendet werden. Üblicherweise kann bei einem als Waschmaschine ausgestalteten Haushaltsgerät 3 mal 15 Liter Wasser als Frischwasser in die Einspülschale über alle Einspüldüsen hineingeleitet werden. Bei einer Anordnung von 50% aller Einspüldüsen oberhalb des Filters beispielsweise können ca. 22 Liter pro Waschgang zum Rückspülen des Filters genutzt werden. Durch diese Maßnahme kann die Standzeit des mindestens einen Filters bis zur Reinigung bzw. Wartung deutlich erhöht werden.

Nach einer weiteren Ausführungsform wird ein flüssiges oder festes Waschmittel mit mindestens einer ersten Wassermenge beaufschlagt und angelöst. Das Waschmittel kann an einem Waschmittelplatz angeordnet oder anordenbar sein. Der Waschmittelplatz kann in der Einspülschale angeordnet sein. Darüber hinaus wird mindestens eine zweite Wassermenge des mindestens einen Wasserstrahls zum Beaufschlagen des Filters vor einem Einspülschalenauslauf miteinander vermischt werden. Vorzugsweise kann der Einspülschalenauslauf in Form eines Trichters oder in Form einer schiefen Ebene bodenseitig der Einspülschale ausgestaltet sein. Durch diese Maßnahme erfolgt eine nachträgliche Vermischung des Rückspülwassers in Form der zweiten Wassermenge und des angelösten Waschmittels in Form der ersten Wassermenge. Somit wird die Beeinträchtigung der Reinigungsleistung des Haushaltsgeräts durch das Rückspülen des mindestens einen Filters minimiert.

Die Beeinträchtigung der Reinigungsleistung des Haushaltsgeräts kann besonders gering ausfallen, wenn ein flüssiges Waschmittel über eine automatische Dosiervorrichtung einer Ablauframpe der Einspülschale zugeführt und dort mit der zweiten Wassermenge vermischt wird. Hierbei kann zudem der Wasserverbrauch gesenkt werden, da für flüssiges Waschmittel weniger Wasser benötigt wird, um dieses einzuspülen (d.h. in den Laugenbehälter zu transportieren).

Gemäß einem weiteren Aspekt der Erfindung wird ein Einspülsystem, insbesondere eines wasserführenden Haushaltsgeräts, bereitgestellt. Das Einspülsystem weist eine Einspülschale und mehrere Einspüldüsen zum Einleiten von Frischwasser in die Einspülschale auf. Vorzugsweise sind die Einspüldüsen deckenseitig in der Einspülschale angeordnet. Die Einspüldüsen können beispielsweise Bestandteil einer deckenseitig angeordneten Düsenplatte sein. Des Weiteren ist mindestens ein Filter vorgesehen, welcher dazu eingerichtet ist, Fluid, welches aus einem Zulauf in die Einspülschale aus einem Laugenbehälter zugeführt werden kann, zu filtern. Erfindungsgemäß ist mindestens eine Einspüldüse auf den mindestens einen Filter gerichtet.

Nach einem weiteren Aspekt der Erfindung wird ein Haushaltsgerät bereitgestellt, insbesondere in Form eines Wäschepflegeräts, wie beispielswiese einer Waschmaschine oder eines Waschtrockners, welches ein erfindungsgemäßes Einspülsystem aufweist.

Bei einer vorteilhaften Ausgestaltung können die Einspüldüsen derart entlang der Einspülschale verteilt sein, dass sowohl ein Waschmittel als ein der mindestens eine Filter bei einem Einleiten von Frischwasser großflächig mit Wasserstrahlen beaufschlagt bzw. umspült werden. Das erfindungsgemäße Einspülsystem ermöglicht mit einem minimalen Modifizierungsaufwand bestehender Haushaltsgeräte die effiziente Rückspülung vom Mikropartikelfiltern in Einspülschalen. Insbesondere kann dies durch eine Umstrukturierung der Anordnung der Einspüldüsen in der Einspülschale realisiert werden.

Der Rückfluss von Fasern und Partikeln aus dem Filter während eines Rückspülvorgangs mittels der Frischwasserzufuhr kann effektiv unterbunden werden, wenn ein Rückschlagventil zwischen dem Zulauf und dem Filter angeordnet ist.

Gemäß einem weiteren Ausführungsbeispiel sind alle Einspüldüsen durch ein gemeinsames Ventil, oder die mindestens eine auf den Filter gerichtete Einspüldüse durch ein zweites Ventil und die mindestens eine auf einen Waschmittelplatz gerichtete Einspüldüse durch ein erstes Ventil ansteuerbar. Bei der Steuerung aller Einspüldüsen über ein gemeinsames Ventil kann das Haushaltsgerät besonders kosteneffizient und technisch einfach ausgestaltet sein. Die separate Steuerung der jeweiligen Einspüldüsen über ein erstes Ventil und ein zweites Ventil zur Steuerung der lokalen Beaufschlagung des Waschmittelplatz (z.B. des Waschmittels) und/oder des Filters mit Frischwasser ermöglicht eine gezieltere Steuerung der Prozesse in der Einspülschale.

Nach einer weiteren Ausführungsform ist der Filter in einem hinteren Teil der Einspülschale relativ zur Öffnungsrichtung der Einspülschale angeordnet. Bevorzugterweise ist mindestens eine Einspüldüse unmittelbar oberhalb oder einseitig seitlich neben dem Filter angeordnet. Durch eine derartige Positionierung von Einspüldüsen im Bereich des Filters kann eine Spülung von einer oder mehreren Filterflächen oder Flächenabschnitten des Filters realisiert werden. Bei einer seitlichen Anordnung von Einspüldüsen können Seitenflächen des Filters für weitere Filtervorgänge geöffnet bzw. freigespült werden, wodurch die Filterwirkung besonders effektiv aufrechterhalten wird.

Gemäß einem weiteren Ausführungsbeispiel ist der mindestens eine Filter mit einer Hauptwaschkammer und/oder mit allen Kammern der Einspülschale fluidführend verbunden. Hierdurch kann der Filter während eines Hauptwaschprograms und/oder während eines Vorwaschprogramms durch mindestens eine Einspüldüse rückgespült werden.

Die Vorteile und Merkmale, die oben im Zusammenhand mit der Vorrichtung erläutert wurden, gelten analog auch für das Verfahren und andersherum. Einzelne Merkmale oder Aspekte der vorliegenden Erfindung können miteinander kombiniert werden und haben die in diesem Zusammenhang erläuterten Vorteile.

Im Folgenden wird die Erfindung anhand von vorteilhaften Ausführungsformen mit Bezug auf die beigefügten Figuren im Detail erläutert. Dabei zeigen:
- Fig. 1: eine Frontansicht eines Haushaltsgeräts mit einem erfindungsgemäßen Einspülsystem gemäß einer Ausführungsform.
- Fig. 2: Schnittdarstellungen eines Einspülsystems zum Veranschaulichen eines erfindungsgemäßen Verfahrens gemäß einer Ausführungsform.

In den Figuren sind gleiche oder einander entsprechende Elemente mit den gleichen Bezugszeichen gekennzeichnet. Faktoren wie beispielsweise numerische Werte, Formen, Komponenten, Positionen von Komponenten und die Weise, wie die Komponenten miteinander verbunden sind, sind lediglich illustrativ und nicht einschränkend. In den Zeichnungen sind aus Gründen der Übersicht und zur Verbesserung der Erkennbarkeit teilweise unterschiedliche Maßstäbe verwendet.

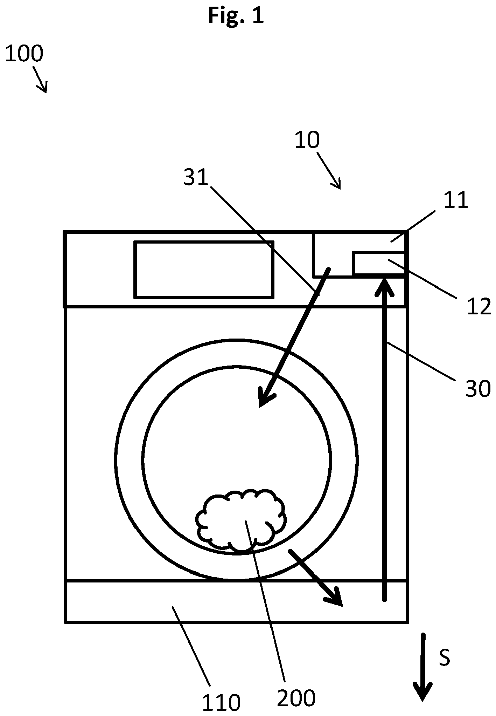

Fig. 1 zeigt eine Frontansicht eines Haushaltsgeräts 100 mit einem erfindungsgemäßen Einspülsystem 10 gemäß einer Ausführungsform. Das Haushaltsgerät 100 ist als ein wasserführendes Haushaltsgerät in Form einer Waschmaschine oder eines Waschtrockners ausgestaltet.

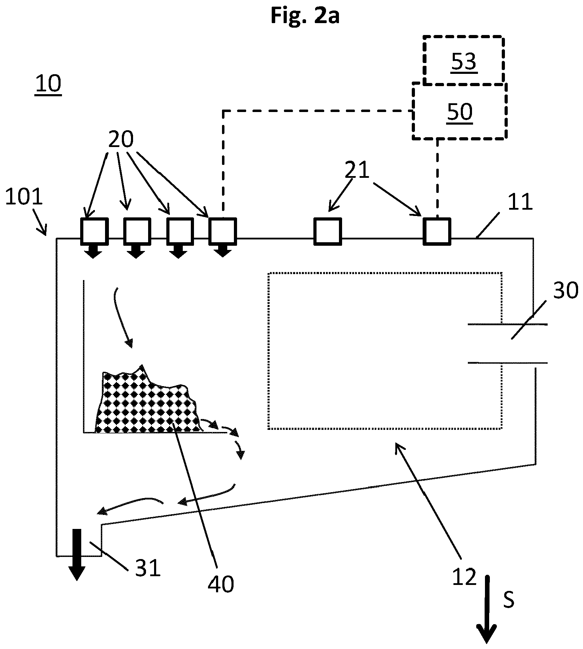

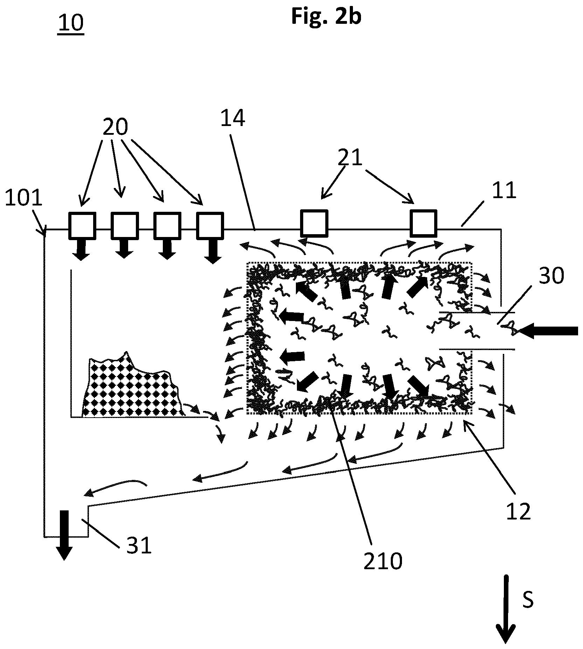

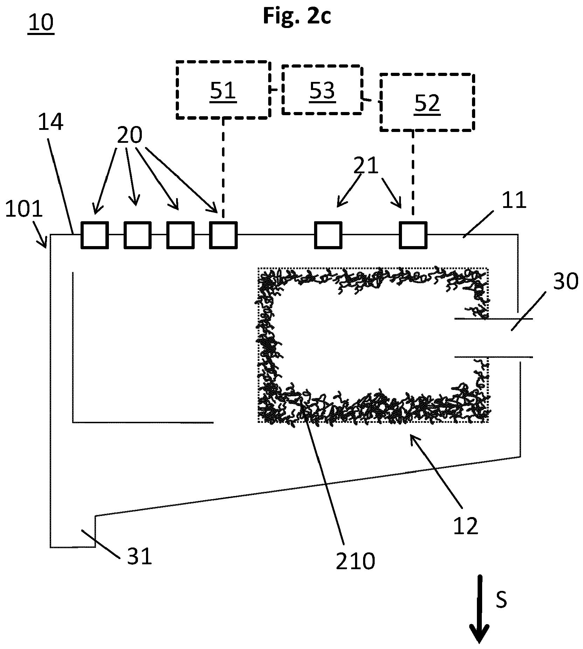

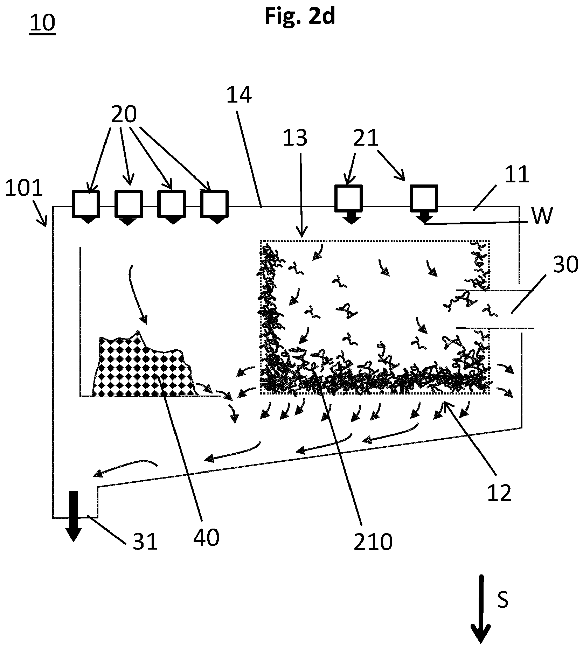

Das Einspülsystem 10 weist eine Einspülschale 11 und mehrere in Fig. 2 gezeigte Einspüldüsen 20, 21 zum Einleiten von Frischwasser in die Einspülschale 11 auf. Im dargestellten Ausführungsbeispiel sind die Einspüldüsen 20, 21 deckenseitig in der Einspülschale 11 angeordnet. Die Einspüldüsen 20, 21 sind beispielsweise Bestandteil einer deckenseitig angeordneten Düsenplatte.

Des Weiteren ist mindestens ein Filter 12 vorgesehen, welcher dazu eingerichtet ist, einen Zulauf 30 in die Einspülschale 11 aus einem Laugenbehälter 110 des Haushaltsgeräts 100 hinsichtlich Mikroplastikpartikeln zu filtern. Ein Teil der Einspüldüsen 21 ist auf den einen Filter 12 bzw. Partikelfilter gerichtet. Der Filter 12 ist von einer Frontseite 101 des Haushaltsgeräts 100 aus gesehen in einem hinteren Bereich der Einspülschale 11 angeordnet.

In der Fig. 2a bis Fig. 2d sind Schnittdarstellungen eines Einspülsystems 10 zum Veranschaulichen eines erfindungsgemäßen Verfahrens zum Reinigen eines Filters 12 in einem wasserführenden Haushaltsgerät 100 gemäß einer Ausführungsform gezeigt.

Je nach Ausgestaltung des Einspülsystems 10 kann der Filter 12 ausschließlich gegenüber den rückzuspülenden Filterflächen geöffnet bzw. zum Filtern ausgestaltet sein. Dabei kann z.B. das Filtergehäuse des Filters 12 nach unten und zu den Seiten vollständig geschlossen sein und mit Frischwasser ausschließlich von oben über die Einspüldüsen 21 beaufschlagt werden. Der Filterzulauf 30 bleibt weiterhin erhalten, kann jedoch nach unten d.h. in Richtung des Laugenbehälters 110 versetzt werden, sodass weniger Restwasser im Filtergehäuse d.h. im unteren schalenförmigen Teil des Filters 12 verbleibt.

Die Frischwasserzulaufdüsen bzw. Einspüldüsen 20, 21 sind derart in der Einspülschale 11 verteilt angeordnet, dass eine Gruppe von Einspüldüsen 20 zum Auflösen des Waschmittels, welches an einem Waschmittelplatz 40 angeordnet oder anordenbar ist und eine Gruppe von Einspüldüsen 21 zum Reinigen von mindestens einer Filterfläche 13 des Filters 12 verwendbar sind.

Dabei kann eine derartige Reinigungsfunktion passiv bzw. ohne zusätzliche Regelungs-und Steuerungstechnik erfolgen. Dabei werden alle Einspüldüsen 20, 21 durch ein gemeinsames Ventil 50 bzw. Frischwasserventil mit Frischwasser versorgt. Der Übersicht halber ist diese Ausführung schematisch in der Fig. 2a gezeigt.

Die Gruppen von Einspüldüsen 20, 21 sind entlang einer Decke 14 der Einspülschale 11 bzw. eines Gehäuses der Einspülschale 11 verteilt angeordnet und ermöglichen eine gezielte Beaufschlagung von mehreren Bereichen bzw. Zonen innerhalb der Einspülschale 11. Eine von derartigen Zonen bildet der Filter 12, sodass beispielsweise eine zweite Gruppe von Einspüldüsen 21 gezielt den Frischwasserzulauf in Schwerkraftrichtung S auf eine oder mehrere Flächen 13 des Filters 12 richtet und die herausgefilterten Fasern 210 von diesen Flächen 13 verdrängen bzw. wegspülen kann. Dieser Schritt ist in der Fig. 2d veranschaulicht.

Durch die Durchflussraten der jeweiligen Einspüldüsen 20, 21 und/oder durch die Anzahl der verwendeten Einspüldüsen 20, 21 kann eine erste für das Auflösen des Waschmittels 40 verwendete Wassermenge und die zweite für das Rückspülen des Filters 12 verwendete Wassermenge gesteuert werden. Hierdurch kann insbesondere das Verhältnis zwischen der ersten Wassermenge und der zweiten Wassermenge eingestellt werden.

Bei einer optionalen Ausgestaltung können die Einspüldüsen 20 für das Anlösen des Waschmittels 40 von einem ersten Ventil 51 und die Einspüldüsen 21 für das Rückspülen oder Reinigen des Filters 12 durch ein zweites Ventil 52 angesteuert werden. Ein Steuergerät 53 kann die Ansteuerung der jeweiligen Ventile 51, 52 tätigen und zeitlich koordinieren. Der Übersicht halber ist diese Ausführung schematisch in der Fig. 2c gezeigt.

Während eines Arbeitsvorgangs des Haushaltsgeräts 100, welcher in Fig. 2a gezeigt ist, wird ein Waschmittel 40 durch Einspüldüsen 20 gelöst und durch den Ablauf 31 der Einspülschale 11 zum Reinigen von Textilien 200 (s. Fig. 1) verwendet. In einem weiteren Schritt, welcher in Fig. 2b gezeigt ist, werden Partikel 210 durch den Filter 12 zurückgehalten. Der mindestens eine Filter 12 dient vorzugsweise zum Filtern, d.h. zum Zurückhalten, von Partikeln 210 in der Größenordnung von Mikroplastikpartikeln. Der Filter 12 wird mit der mikroplastikfaserhaltigen Waschlauge aus dem Laugenbehälter 110 über den Zulauf 30 gespeist. Die Partikel und/oder Fasern 210 werden durch die feine Filtergaze des Filters 12 zurückgehalten. Dieser Vorgang resultiert grundsätzlich in einem Zusetzen des Filters 12. Ein Einspülsystem 10 mit einem entsprechend zugesetzten Filter 12 ist in Fig. 2c dargestellt. Ein weiteres Verwenden des Filters 12 würde die Durchflussrate durch den Filter 12 deutlich reduzieren oder eine nicht dargestellte Umwälzpumpe auf Dauer überlasten.

Während des Arbeitsvorgangs und/oder bei einer erneuten Inbetriebnahme des Haushaltsgeräts 100 wird der mindestens eine Filter 12 durch mindestens eine Einspüldüse 21 mit einem Wasserstrahl W beaufschlagt. Mindestens eine durch den Wasserstrahl W der Einspüldüse 21 beaufschlagte Filterfläche 13 wird hierbei von dem Filtrat bzw. den Partikeln 210 freigelegt. Durch das Beaufschlagen von mindestens einer Filterfläche 13 mit dem Wasserstrahl W erfolgt ein zumindest bereichsweises Freispülen von Filterflächen 13 des Filters 12, wodurch die Filterfunktion erneut hergestellt wird. Dieser Schritt ist in der Fig. 2d veranschaulicht. Die Fasern bzw. Partikel 210 im Filter 12 werden durch die deckenseitig angeordneten Einspüldüsen 21 bereichsweise von Filterflächen 13 verdrängt und können sich somit bodenseitig relativ zu einer Schwerkraftrichtung S sammeln.

Der Filter 12 wird im dargestellten Ausführungsbeispiel mit derartig angeordneten Einspüldüsen mit dem Wasserstrahl W beaufschlagt, die speziell für das Rückspülen des Filters 12 oberhalb des Filters 12 positioniert wurden. Das Einspülsystem 10 weist somit eine örtliche Verteilung von Einspüldüsen 20, 21 entlang einer Decke 14 der Einspülschale 11 auf, welche ein gezieltes Spülen des Waschmittels 40 und ein gezieltes Rückspühlen des Filters 12 zulässt.

### Bezugszeichenliste

10 - Einspülsystem
11 - Einspülschale
12 - Filter
13 - Freigespülte Filterfläche
100 - Haushaltsgerät
101 - Vorderseite des Haushaltsgeräts
110 - Laugenbehälter
200 - zu reinigende Textilien
210 - Filtrat / gefilterte Partikel
20 - erste Einspüldüsen
21 - zweite Einspüldüsen
30 - Zulauf
31 - Ablauf
40 - Waschmittelplatz mit oder ohne Waschmittel
50 - gemeinsames Ventil
51 - erstes Ventil
52 - zweites Ventil
53 - Steuergerät
W - Wasserstrahl
S - Schwerkraftrichtung

## Patentansprüche

1. Verfahren zum Reinigen eines Filters (12) in einem wasserführenden Haushaltsgerät (100), wobei während eines Arbeitsvorgangs des Haushaltsgeräts (100) Partikel (210) durch mindestens einen Filter (12) zurückgehalten werden, wobei während des Arbeitsvorgangs und/oder bei einer erneuten Inbetriebnahme des Haushaltsgeräts (100) der mindestens eine Filter (12) durch mindestens eine Einspüldüse (21) mit einem Wasserstrahl (W) beaufschlagt wird, wobei eine durch den Wasserstrahl (W) der Einspüldüse (21) beaufschlagte Filterfläche (13) von Partikeln (210) freigelegt wird.

2. Verfahren nach Anspruch 1, wobei der mindestens eine Filter (12) durch mindestens eine Einspüldüse (21) bei jedem Einleiten von Frischwasser mit einem Wasserstrahl (W), insbesondere von einer Außenseite des Filters, beaufschlagt wird.

3. Verfahren nach Anspruch 1 oder 2, wobei ein flüssiges oder festes Waschmittel (40) mit mindestens einer ersten Wassermenge beaufschlagt und angelöst wird, wobei mindestens eine zweite Wassermenge des mindestens einen Wasserstrahls (W) zum Beaufschlagen des Filters (12) vor einem Auslauf (31) der Einspülschale (11) miteinander vermischt werden.

4. Verfahren nach Anspruch 3, wobei ein flüssiges Waschmittel (40) über eine automatische Dosiervorrichtung einer Ablauframpe der Einspülschale (11) zugeführt und dort mit der zweiten Wassermenge vermischt wird.

5. Einspülsystem (10), insbesondere eines wasserführenden Haushaltsgeräts (100), aufweisend eine Einspülschale (11) und mehrere Einspüldüsen (20, 21) zum Einleiten von Frischwasser in die Einspülschale (11), wobei die Einspüldüsen (20, 21) deckenseitig in der Einspülschale (11) angeordnet sind, und aufweisend mindestens einen Filter (12), welcher dazu eingerichtet ist, Fluid, welches aus einem Zulauf (30) in die Einspülschale (11) aus einem Laugenbehälter (110) zugeführt werden kann, insbesondere hinsichtlich Mikroplastikpartikeln, zu filtern, **dadurch gekennzeichnet, dass** mindestens eine Einspüldüse (21) auf den mindestens einen Filter (12) gerichtet ist.

6. Einspülsystem nach Anspruch 5, wobei ein Rückschlagventil zwischen dem Zulauf (30) und dem Filter (12) angeordnet ist.

7. Einspülsystem nach Anspruch 5 oder 6, wobei alle Einspüldüsen (20, 21) durch ein gemeinsames Ventil (50), oder die mindestens eine auf den Filter (12) gerichtete Einspüldüse (21) durch ein zweites Ventil (52) und die mindestens eine auf ein Waschmittelplatz (40) gerichtete Einspüldüse (20) durch ein erstes Ventil (51) ansteuerbar sind.

8. Einspülsystem nach einem der Ansprüche 5 bis 7, wobei der Filter (12) in einem hinteren Teil der Einspülschale relativ zur Öffnungsrichtung der Einspülschale oder relativ zur Vorderseite (101) des Haushaltsgeräts (100) angeordnet ist, wobei mindestens eine Einspüldüse (21) unmittelbar oberhalb oder einseitig seitlich neben dem Filter (12) angeordnet ist.

9. Einspülsystem nach einem der Ansprüche 5 bis 8, wobei der Filter (12) mit einer Hauptwaschkammer und/oder mit allen Kammern der Einspülschale (11) fluidführend verbunden ist.

10. Haushaltsgerät (100), insbesondere in Form eines Wäschepflegeräts, wie beispielswiese einer Waschmaschine oder eines Waschtrockners, aufweisend ein Einspülsystem (10) gemäß einem der Ansprüche 5 bis 9.
